# EUROPEAN PATENT SPECIFICATION

(11) **EP 0 732 056 B1**
(45) Date of publication and mention of the grant of the patent: **03.07.2002**
(21) Application number: 95301641.7
(22) Date of filing: 13.03.1995
(51) Int. Cl.: A23G 3/30

(54) **Continuous gum base manufacturing using highly distributive mixing**
Kontinuierliche Herstellung von kaugummi-Grundmasse druch verteilte Mischung
Fabrication en continu de gomme de base par mélange distributif

(43) Date of publication of application: 18.09.1996
(73) Proprietor: WM. WRIGLEY JR. COMPANY, Chicago Illinois 60611 (US)
(72) Inventor: Song, Joo H., Northbrook, Illinois (US); Townsend, Donald J., Chicago, Illinois (US)
(74) Representative: Baverstock, Michael George Douglas

(56) References cited:
- EP-A- 0 160 726
- FR-A- 2 635 441

## Description

This invention is directed to a continuous process for the manufacture of complete chewing gum bases.

A typical chewing gum base includes one or more elastomers, one or more fillers, one or more elastomer solvents, plasticizers and optional plastic polymers, waxes, emulsifiers and miscellaneous colors, flavors and antioxidants. Due primarily to the difficulty in melting and dispersing the elastomers homogeneously among the other gum base ingredients, gum base manufacture has typically been a tedious and time-consuming batch process. For example, one such conventional process uses a sigma blade batch mixer having a front to rear blade speed ratio of about 2:1, and a mixing temperature of from 80 to 120°C.

In this conventional process, initial portions of elastomer, elastomer solvent and filler are added to the heated sigma blade mixer and blended until the elastomer is melted or smeared and thoroughly mixed with the plasticizer and fillers. Then the remaining portions of elastomer, elastomer solvent, plasticizer, fillers, emulsifiers and other ingredients are added sequentially, in a stepwise fashion, often with sufficient time for each stepwise addition to become completely mixed before adding more ingredients. Depending on the composition of the particular chewing gum bases and, in particular, the amount and type of elastomer, considerable patience may be required to insure that each ingredient becomes thoroughly mixed. Overall, anywhere from one to four hours of mixing time can be required to make one batch of chewing gum base using a conventional sigma blade mixer.

After mixing, the molten gum base batch must be emptied from the mixer into coated or lined pans, or pumped to other equipments such as a holding tank or a filtering device, then extruded or cast into shapes, and allowed to cool and solidify, before being ready for use in chewing gum. This additional processing and cooling requires even more time.

Various efforts have been undertaken to try to simplify and reduce the time required for gum base manufacture. European Patent Publication No. 0 273 809, in the name of General Foods France, discloses a process for making nonadhesive chewing gum base by blending elastomer and filler components together in a continuous mill to form a nonadhesive premix, dividing the premix into fragments, and blending the premix fragments and at least one other nonadhesive gum base component together in a powder mixer. Alternatively, the premix fragments and other base components can be added to an extruder along with other chewing gum components to accomplish direct manufacture of chewing gum.

French Patent Publication No. 2 635 441, also in the name of General Foods France, discloses a process for making a gum base concentrate using a twin screw extruder. The concentrate is prepared by mixing high molecular weight elastomers and plasticizers in desired proportions and feeding them into the extruder. Mineral fillers are added to the extruder downstream of the feed inlet of the elastomer/plasticizer blend. The resulting gum base concentrate has a high level of elastomers. The concentrate can then be mixed with the other gum base ingredients to provide a complete gum base.

U.S. Patent No. 4,968,511, issued to D'Amelia et al., discloses that chewing gum can be made directly in a one-step compounding process (without making an intermediate gum base) if certain vinyl polymers are used as the elastomer portion.

U.S. No. Patent No. 4,187,320, issued to Koch et al., discloses a two-stage process for making a chewing gum base in a mixing kettle.

U.S. Patent No. 4,305,962, issued to del Angel, discloses a process for making an elastomer/ resin masterbatch as a precursor to a gum base.

U.S. Patent No. 4,459,311, issued to DeTora et al., discloses making gum base using two separate mixers - a high intensity mixer for pre-plasticizing the elastomer in the presence of a filler, followed by a medium intensity mixer for ultimately blending all the gum base components together.

Several publications disclose that a continuous extruder can be used to make the ultimate chewing gum product after a separate process has previously been used to make the chewing gum base. These publications include U.S. Patent No. 5,135,760, issued to Degady et al.; U.S. Patent No. 5,045,325, issued to Lesko et al., and U.S. Patent No. 4,555,407, issued to Kramer et al.

Notwithstanding the prior efforts described above, there is a need and desire in the chewing gum industry for a continuous process which can effectively and efficiently be used to make a variety of complete chewing gum bases without limiting the type or quantity of elastomer employed, and without requiring preblending or other pretreatment of the elastomer. It would be particularly beneficial to be able to produce high quality chewing gum bases that incorporate waxes, fats and/or oils as plasticisers in the gum using a continuous process.

The present invention provides a single continuous process for producing a complete chewing gum base comprising the steps of:
a) continuously adding first gum base ingredients comprising at least some elastomer, filler, and elastomer solvent into a continuous mixer;
b) subjecting the elastomer, filler and elastomer solvent to sufficient highly dispersive mixing within the continuous mixer to produce a substantially smooth and lump-free mixture;
c) adding second gum base ingredients comprising at least one or more fats or oils;
d) subjecting the first and second gum base ingredients to sufficient highly distributive mixing within the continuous mixer to produce a substantially homogenous mixture; and
e) continuously discharging the resulting chewing gum base from the continuous mixer while steps a), b), c) and d) are in progress.

The present invention can be used for the continuous manufacture of a wide variety of complete gum bases which may include many or all of the following components, in the following percentages:

| Component | Range (% by weight) |
|---|---|
| Elastomer(s) | 5.0 to 95 |
| Elastomer Solvent(s) | 0 to 50 |
| Plasticiser(s) | 0 to 75 |
| Wax(es) | 0 to 30 |
| Emulsifier(s) | 0.5 to 40 |
| Filler(s) | 1.0 to 65 |
| Colorant(s)/flavour(s) | 0 to 3.0 |

The present invention can be performed using a single continuous mixing process, preferably carried out in a twin-screw extruder.

As used herein the term "highly dispersive mixing" means that the ingredients for example elastomer, elastomer solvent and filler, are broken down into very small particles, droplets or "domains" which readily become dispersed among themselves and which can later be distributed, substantially homogeneously, among the other gum base ingredients. This dispersive mixing stage can be thought of as a disentanglement and "breaking down" stage for the gum base components which are the most difficult to disperse. Special mixing elements are used for this purpose, as discussed below in the detailed description.

The chewing gum base ingredients may be added sequentially to the continuous extruder, at different locations, in an order which approximately corresponds to a decreasing order of viscosity. The relatively high viscosity chewing gum base ingredients (for example, most elastomers) are added to the extruder first with filler and elastomer solvent, at an upstream location, and are mixed together. The filler and elastomer solvent help disperse the elastomer. The intermediate viscosity gum base ingredients (for example, polyvinyl acetate, low molecular weight elastomers and elastomer solvents) are added to the extruder second, at an intermediate location, and are mixed with the high viscosity ingredients previously added. The relatively low viscosity gum base ingredients (for example, oils, fats and waxes) are added to the extruder third, at a downstream location, and are mixed with the high and intermediate viscosity ingredients previously added.

The elastomer, plasticizer, filler, and possibly other ingredients for example elastomer solvent any intermediate viscosity ingredients (for example, polyvinyl acetate) and, optionally, low viscosity ingredients (for example, fats, oils and waxes) are continuously mixed together under conditions of highly distributive mixing. By "highly distributive mixing" is meant that the ingredients are spread out or "distributed" among each other to form a substantially homogeneous chewing gum base blend. By way of analogy, the "dispersive mixing" stage, described above, causes the elastomer, using the filler as a processing aid for dispersive mixing, to be "broken down" into very small particles, droplets or domains. The "distributive mixing" stage, which occurs further downstream in the continuous process, causes these very small particles, droplets or domains to become evenly distributed among the remaining gum base ingredients.

Volatile components of the gum base mixture are preferably continuously removed during the extrusion process. These volatile components include unwanted degradation products; for example, degraded elastomer, elastomer solvent or plasticizer, which occur in small amounts from the mixing process. Removal of the volatile components helps eliminate undesirable off-notes from the flavor of the chewing gum base. This can be accomplished, for example, by pulling a vacuum on the extruder upstream from where the polyvinyl acetate is added. If the degradation products are allowed to mix with polyvinyl acetate, they become very difficult to remove.

Low and/or medium viscosity ingredients are preferably injected in a liquid state under pressure, using a pump. The liquid state can be achieved by premelting an ingredient such as polyvinyl acetate or wax, or by lowering the viscosity of a fat or oil, using one or more heated feed tanks. The injection of a liquid under pressure facilitates more precise metering and better mixing and distribution of the low and medium viscosity ingredients.

The invention has numerous advantages. First, chewing gum base is produced in a continuous process. If desired, the output can be used to supply a continuous chewing gum production line. Second, the average residence time for gum base ingredients is reduced from hours to minutes. Third, all of the necessary addition and compounding steps can be performed in sequence using a single continuous mixing apparatus. Fourth, the preferred embodiment provides improved metering and mixing of intermediate and low viscosity gum base ingredients by adding these ingredients in the liquid state under pressure. Fifth, the invention is effective for a wide range of gum base compositions, including different gum base elastomers and elastomer percentages, without requiring preblending or other pretreatment of the elastomers. Sixth, the gum base can be produced on demand, eliminating finished base inventory. This allows maximum flexibility to react to market demands and formula changes.

The foregoing and other features and advantages of the invention will become further apparent from the following detailed description of the presently preferred embodiments, read in conjunction with the accompanying examples and drawings.

### BRIEF DESCRIPTION OF THE DRAWINGS

FIG. 1 depicts a schematic representation of a twin screw extruder set up for use in practicing the present invention.

FIG. 2 depicts a set of shearing disks used in the extruder of FIG. 1.

FIG. 3 depicts a set of toothed elements used in the extruder of FIG. 1.

FIG. 4 depicts a set of kneading disks used in the extruder of FIG. 1.

FIG. 5 depicts a plurality of kneading disks, set up in a helical fashion, to form kneading blocks.

FIGS. 6a-e depict schematic sequential representations of gum base ingredients during the mixing process.

The chewing gum base made by the process of the present invention can be made into conventional chewing gums, including bubble gum, by conventional methods. The details of such chewing gums and methods of production are well known and therefore not repeated here. Of course, specialized chewing gum, such as nonadhesive chewing gum and bubble gum, will use specialized gum base ingredients. However, those gum base ingredients can be combined using the processes herein described.

In general, a chewing gum composition typically comprises a water-soluble bulk portion, a water-insoluble chewable gum base portion and typically water-insoluble flavoring agents. The water-soluble portion dissipates with a portion of the flavoring agent over a period of time during chewing. The gum base portion is retained in the mouth throughout the chew.

The insoluble gum base generally comprises elastomers, elastomer solvents, plasticizers, waxes, emulsifiers and inorganic fillers. Plastic polymers, such as polyvinyl acetate, which behave somewhat as plasticizers, are also often included. Elastomers may include polyisobutylene, butyl rubber (isobutylene-isoprene copolymer) and styrene butadiene rubber, as well as natural latexes such as chicle. Elastomer solvents are often resins such as terpene resins. Plasticizers are typically fats and oils, including tallow, hydrogenated and partially hydrogenated vegetable oils, and cocoa butter. Commonly employed waxes include paraffin, microcrystalline and natural waxes such as beeswax and carnauba.

The gum base typically also includes a filler component. The filler component may be calcium carbonate, magnesium carbonate, talc, dicalcium phosphate or the like. The filler may constitute from 5 to 60 percent by weight of the gum base. Preferably, the filler comprises from 5 to 50 percent by weight of the gum base.

Emulsifiers, which also sometimes have plasticizing properties, include glycerol monostearate, lecithin and glycerol triacetate. Further, gum bases may also contain optional ingredients such as antioxidants, colors and flavors.

The insoluble gum base may constitute from 5 to 80 percent by weight of the gum. More typically the insoluble gum base comprises from 10 to 50 percent by weight of the gum and most often from 20 to 35 percent by weight of the gum.

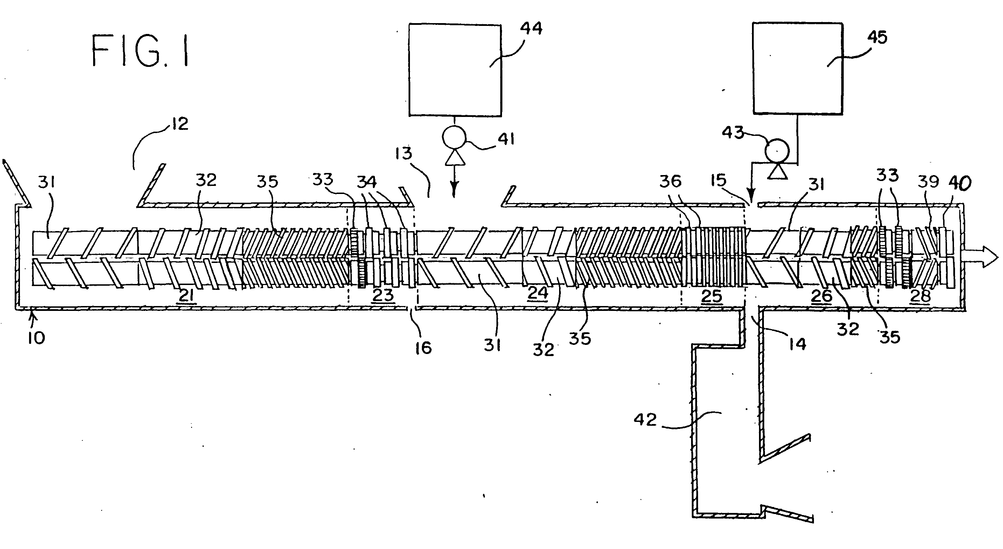

The preferred process of the present invention is carried out on a twin screw extruder such as depicted schematically in FIG. 1. The twin screw extruder used to practice the preferred embodiment of the invention will be set up with several different feed inlet locations where chewing gum base ingredients can be added. The screws inside the barrel of the extruder are equipped with different types of elements along the length of the screws. The different sections are sometimes referred to as processing sections, and described by the type of elements employed in the sections. The barrel for the extruder is typically divided into zones that may be heated or cooled independent of other zones. These heating zones may or may not coincide with processing sections, depending on the lengths of the barrel zone sections and the elements in the processing sections.

While different equipment manufacturers make different types of elements, the most common types of elements include conveying elements, compression elements, reverse elements, homogenizing elements such as shearing disks and toothed elements, and kneading disks and blocks. Conveying elements generally have flights spiraling along the elements with wide gaps between the flights. These elements are used at feed inlet sections to quickly move material into the body of the extruder. Compression elements have flights with a pitch that narrows as the material moves along the flights. This results in compression and high pressure in the forward direction, which is required to force material downstream and through the other elements. Reverse elements have flights that are angled opposite those of the conveying elements. The flights rotate in a direction that would force material upstream. These elements provide a high back pressure and slow down movement of the material through the extruder. Of course, the extruded material still works its way opposite the flights to move downstream through the reverse elements. A reverse helical arrangement of kneading blocks can accomplish a similar result.

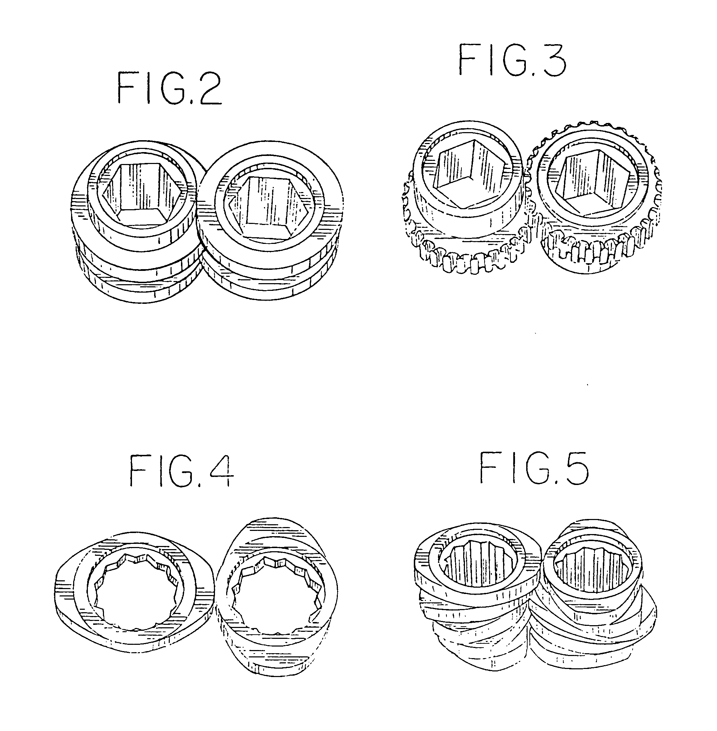

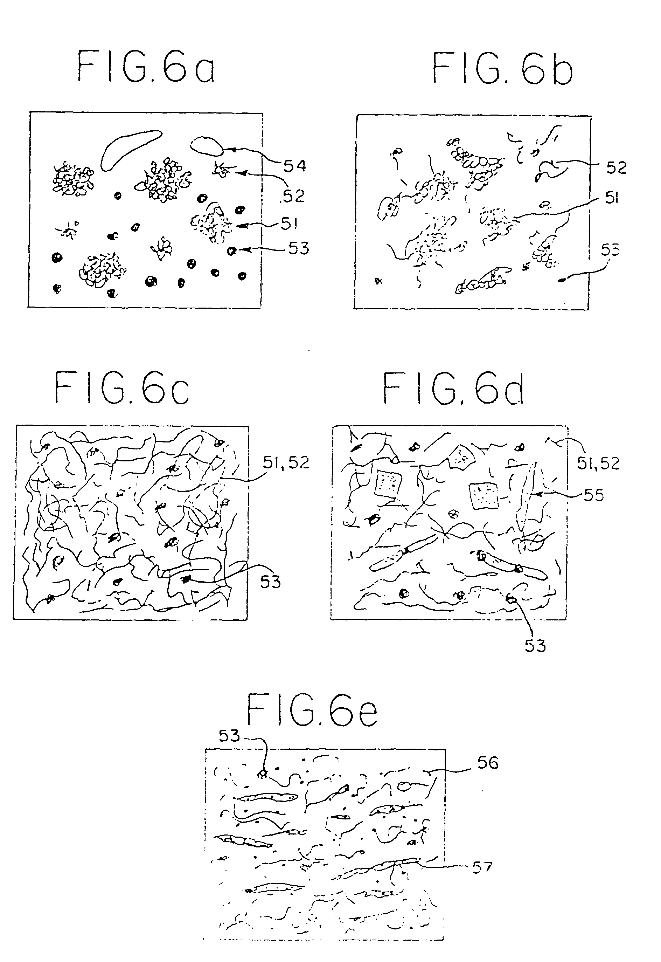

Shearing disks, as their name implies, impart high shearing forces on the material in the extruder, resulting in highly dispersive mixing. In a twin screw extruder, the shearing disks opposite one another on the two different screws have close fitting disk/slot elements, as depicted in FIG. 2. Toothed elements, as depicted in FIG. 3, have gear-like teeth that oppose a cylindrical spacer shaft on the other screw. Toothed elements impart highly distributive mixing. Often the toothed elements are made in matched sets, with a cylindrical shaft portion and a toothed portion as one unit. Kneading disks, as shown in FIG. 4, have an elliptical shape, and produce a kneading action in the material passing through the extruder. Often a plurality of kneading disks will be placed next to each other in a helical arrangement, as shown in FIG. 5, referred to as kneading blocks.

Highly distributive mixing can also be accomplished using reverse conveyance elements that have portions missing from the flights to allow flow counter to the direction of compression. These missing portions may be arranged as a groove through the flights cut parallel to the length of the element. Also, kneading blocks followed by reverse conveyance elements, to build up high back pressure, also produce highly distributive mixing.

These elements, and other elements useful in twin screw extruders, are well known in the art and are commercially available. The elements are often specifically designed for the different types of commonly available twin screw extruders, which include co-rotation, counter rotation, intermeshing and tangential twin screw extruders. Elements intended for similar functions will vary in design depending on the type of extruder for which they are intended.

One specific type of element for a specific brand of extruder is a non-intermeshing polygon element sold by the Farrel Corporation, 25 Main Street, Ansonia, Conn. 06401, for the Farrel-Rockstedt co-rotating twin screw extruder. It is believed that the non-intermeshing polygons produce dispersive mixing.

In preferred embodiments of the invention, the dispersive mixing disentangles the elastomers with a minimum amount of degradation of the polymer chains. Thus, while dispersive mixing will inevitably reduce the molecular weight of the polymer, it is preferable to control the dispersive mixing operation to minimize this molecular weight reduction. Preferably, the average molecular weight will not be reduced below the average molecular weight of the same polymers mixed into gum base using conventional processes.

An adequate dispersive mixing will produce a smooth, rubbery fluid, with no detectable lumps of rubber. If only a few lumps of rubber are present they may be screened out or dispersed during subsequent mixing steps. However, if the number or size of lumps is excessive, or the processed elastomers and fillers are in the form of an agglomeration or grainy mass, the dispersive mixing applied is inadequate.

The distributive mixing should be sufficient to produce a homogeneous gum base, rather than a material that appears to be "sweating", or that has a marbled or swiss cheese texture. In the preferred embodiment of the invention, the highly distributive mixing is sufficient to incorporate plasticizers, particularly fats, oils and waxes, to the same degree these plasticizers are incorporated in conventional chewing gum base manufacturing processes.

As shown in FIG. 1, for practicing a first preferred embodiment of the invention, a twin screw extruder 10 is set up with a first feed inlet location 12 adjacent a first processing section 21 fitted with conveying elements 31, conveying and compression elements 32 and compression elements 35. The second processing section 23 is equipped with a combination of toothed elements 33, as depicted in FIG. 3, and several sets of shearing disks 34, as depicted in FIG. 2. At the end of the second processing section 23 the extruder 10 is equipped with a port 16 which is connected to a vacuum source (not shown). The third processing section 24 contains additional conveying elements 31, conveying and compression elements 32 and compression elements 35. A second feed inlet 13 is provided in the extruder adjacent this second set of conveying elements 31, for feeding additional gum base ingredients into the third processing section 24. Feed inlet 13 allows for the addition of powdered ingredients as well as liquid ingredients from pump 41. The fourth processing section 25 is fitted with kneading disks 36. At the beginning of the fifth processing section 26, the twin screw extruder 10 has another inlet 15 connected to a pump 43 and a feed inlet 14 in the form of a port connected to a side feeder 42, which may be a single or twin screw extruder, or even a gear pump which can generate high pressure. The fifth processing section 26 is fitted with conveying elements 31, conveying and compression elements 32 and compression elements 35, which force the gum base ingredients into the sixth and final processing section 28. Section 28 contains two sets of toothed elements 33, followed by reverse elements 39 and shearing disks 34. After passing through the shearing disks 34, the gum base ingredients exit the extruder 10.

It may be preferable to heat some of the ingredients, either to melt them or lower their viscosity. As shown in FIG. 1, the extruder 10 may be set up with heated tanks 44 and 45, connected respectively to pumps 41 and 43, for this purpose. Other commonly used equipment, such as equipment to monitor the temperature and heat or cool the extruder, is not shown in FIG. 1. The equipment will also include conventional weighing and feeding devices for continuously adding granulated or powdered ingredients at a controlled, monitored rate.

It will be understood that FIG. 1, as a schematic representation, shows the various components in their respective order from the standpoint of flow through the extruder 10. Typically the screws are mounted in a horizontal side-to-side position and feed inlets, especially those open to the atmosphere like the inlet 12 and 13, are placed vertically above the screws.

While the arrangement of FIG. 1 is preferred for particular gum bases outlined in the examples below, other arrangements may be preferred for other gum bases. FIG. 1 depicts an extruder with three general areas of ingredient addition and six processing sections. For some gum bases, two, four or more ingredient feeding sections may be used, with different numbers of processing sections. FIG. 1 also depicts the use of one set each of long conveying elements 31, conveying and compression elements 32 and compression elements 35 in the first processing section 21, a short set of conveying and compression elements 32 in sections 24 and 26, and a short set of conveying elements 31 and compression elements 35 in section 26. In reality, one, two or more elements of different types and length may be used in these sections. FIG. 1 also depicts one set of toothed elements 33 and three sets of shearing disks 34 in section 23, but different numbers of these elements, or different elements all together, may be used. Likewise in sections 25 and 28, different types of elements that produce distributive mixing may be used, dependent on the gum ingredients being mixed in those sections and the type of extruder being used.

FIGS. 6a-e represent the state of various gum base ingredients as they are compounded into chewing gum base. At the beginning, as shown in FIG. 6a, the high molecular weight elastomer 51 and medium molecular weight elastomer 52 are both in the form of granules or particles in which the elastomer molecules are tightly bound together. The filler 53 is in particulate form, but may not be homogeneously mixed with the elastomers 51 and 52. The elastomer solvent 54 may be present in the form of droplets. As mixing begins, depicted in FIG. 6b, the elastomer solvent 54 becomes associated with the elastomers 51 and 52. With the presence of the filler 53, elastomer solvent 54 and heat, the granules begin to come apart into individual elastomer molecules. Also, the filler 53 becomes more evenly distributed, and may have its particle size reduced. As the process continues, the elastomers 51 and 52 become disentangled, as shown in FIG. 6c. This disentangling is the result of subjecting the elastomers 51 and 52 to highly dispersive mixing.

After this step, the lower viscosity ingredients, such as polyvinyl acetate 55, may be added, as shown in FIG. 6d. Initially, this material will also be in discrete particles, or droplets as it melts. Further mixing and further ingredient additions, such as waxes 56 and emulsifiers 57, are subjected to distributive mixing, as depicted in FIG. 6e. Continued highly distributive mixing produces a homogeneous chewing gum base, wherein discrete particles or droplets are not detectible by sensory perception.

The elastomer may be added at the first feed inlet 12 along with elastomer solvent such as resins and the filler. However, especially lower weight elastomers may be added at least partially at the second feed inlet 13. Portions of the filler may also be added at the second feed inlet 13. Polyvinyl acetate may be added via a powder feeder or the single screw extruder 42, or a twin screw extruder or gear pump, at the feed inlet port 14, while melted fats and waxes and oils are added at the last feed inlet 15. This will result in the filler, elastomer and elastomer solvent being subjected to highly dispersive mixing first before lower viscosity ingredients are added. The toothed elements 33, reverse elements 39 and shearing disk 40 after feed inlet 15 result in highly distributive mixing of all of the low viscosity gum base ingredients with the other gum base ingredients.

A preferred small scale extruder is a model LSM 30.34 counter-rotational, intermeshing and tangential twin screw extruder from Leistritz, Nürenberg, Germany. Other acceptable twin screw extruders include the Japan Steel Works Model TEX30HSS32.5PW-2V intermeshing co- and counter-rotating twin screw extruder, also known as the Davis Standard D-Tex Model, distributed by Crompton & Knowles Corporation, #1 Extrusion Dr., Pawcatuck, CT 06379, and either the co-rotating or counter-rotating intermeshing twin screw extruders from Werner & Pfleiderer Corporation, 663 E. Crescent Ave., Ramsey N.J. 07446. It is preferred to have a long barrel length. A Werner & Pfleiderer co-rotational twin screw extruder can go up to a length to diameter ("L/D") ratio of 48. The Japan Steel Works Model TEX30HSS32.5PW-2V extruder may be equipped to have an L/D of 58.

### Example 1

Gum base was made on a continuous basis using a Leistritz model LSM 30.34 counter-rotational, intermeshing and tangential extruder in intermeshing mode with a barrel diameter of 30.3 mm set up with the following elements (given in order proceeding from first feed inlet to the output end of the extruder and using the Leistritz part designation for each element):
FF-1-30-120 (conveying element)
KFD-1-30/20-120 (conveying and compression element)
FD-3-30-120 (compression element)
ZSS-2-R4 (toothed element)
ZSS-2-R4
KS (shearing disk)
KS
FF-1-30-120
KFD-1-30/20-120
FD-3-30-120
ZSS-2-R4
ZSS-2-R4
ZSS-2-R4
KS
The die at the end of the extruder had a 1mm hole.

The extruder had two feeding zones, each one adjacent the FF-1-30-120 conveying elements. A powder blend of ground butyl rubber, calcium carbonate and terpene resin at a ratio of 6:23:17 was fed at a rate of 3 kg/hr in the first feed zone. Polyisobutylene at 50-80°C was also fed at the first feed zone at a rate of 0.39 kg/hr. A powder blend of 5 parts glycerol monostearate, 8 parts hydrogenated cottonseed oil, 5 parts hydrogenated soybean oil, 3 parts high molecular weight polyvinyl acetate and 21 parts low molecular weight polyvinyl acetate was fed into the second feeding zone at a rate of 2.74 kg/hr, along with a blend of 3 parts partially hydrogenated soybean oil and 3 parts lecithin heated to 30°C and fed at a rate of 0.4 kg/hr. The temperature of the extruder housing during operation was as follows:

| Zone | 1 | 2 | 3 | 4 | 5 | 6 | 7 | Die |
|---|---|---|---|---|---|---|---|---|
| Set Temperature | 90°C. | 90°C. | 95°C. | 130°C. | 130°C. | 130°C. | 110°C. | |
| Actual Temperature | 90°C. | 99°C. | 95°C. | 130°C. | 130°C. | 130°C. | 110°C. (est.) | 115°C. (est.) |

The extruder was operated at a speed of 100 rpm and drew 9 amps. A chewing gum base was produced which had no rubber particles or segregated oil. However, some of the polyvinyl acetate was not fully incorporated. This would be incorporated as the base was used to make chewing gum, or if desired, could be eliminated by using a single screw extruder as a side feeder/premelter for the polyvinyl acetate.

### Example 2

The same extruder set up and temperatures as used in Example 1 were used to continuously make another chewing gum base. A powder blend of ground butyl rubber and calcium carbonate at a ratio of 15:31 was fed into the first zone at a rate of 3 kg/hr, along with polyisobutylene heated to 50-80°C and fed at a rate of 2.08 kg/hr. A powder blend of 22 parts low molecular weight polyvinyl acetate, 13 parts hydrogenated cottonseed oil, 3 parts glycerol monostearate and 13 parts hydrogenated soybean oil was fed into the second feed inlet at a rate of 6.63 kg/hr, along with partially hydrogenated soybean oil heated to 30-60°C and fed at a rate of 1.3 kg/hr. The extruder was operated at 100rpm, and drew 7-8 amps. A complete chewing gum base was prepared, although it was not as well mixed as the base of Example 1 and there were difficulties in material accumulating at the second feed zone.

### Example 3

An Leistritz Model 30.34 twin screw extruder is setup as shown in FIG. 1, with the following elements (the numbers to the left in parenthesis represent reference numbers from FIG. 1):
- (31): FF-1-30-120
- (32): KFD-1-30/20-120
- (35) FD-3-30-120
- (33): ZSS-2-R4
- (34): KS
- (34): KS
- (34): KS
- (31): FF-1-30-120
- (32): KFD-1-30/20-60
- (35): FD-3-30-120
- (36): 18 kneading disks, stacked in 2 sets of 2 and 4 sets of 3, with a 90° set off between each set.
- (31): FF-1-30-60
- (32): KFD-1-30/20-60
- (35): FD-3-30-30
- (33): ZSS-2-R4
- (33): ZSS-2-R4
- (39): FF-1-30-30 (set up for reverse operation)
- (34): KS
The overall length of these elements is 1060 mm, giving a L/D for a 30.3 mm barrel of about 35.

The following ingredients are added at the following rates to the extruder 10 at the locations specified. The rates listed are for steady state operation.

| INGREDIENTS | % BY WEIGHT | FEED INLET LOCATION |
|---|---|---|
| Terpene resin (51°C (123°F) melting point) | 8.390 | 12 |
| Terpene resin (29°C (85°F) melting point) | 8.257 | 12 |
| Cocoa powder (<75 micron wet particle size) | 0.599 | 12 |
| Ground isobutylene-isoprene copolymer (120,000-150,000 MW, 2-7 mm diameter particle size) | 8.390 | 12 |
| Calcium carbonate (<12 micron particle size) | 20.908 | 12 |
| Polyisobutylene (12,000 M.W.) (heated to 100°C.) | 5.860 | 13 |
| Polyvinyl acetate (50,000-80,000 M.W.) | 2.663 | 14 |
| Polyvinyl acetate (25,000 M.W.) | 21.309 | 14 |
| Glycerol monostearate | 4.794 | 15 |
| Hydrogenated soybean oil | 4.528 | 15 |
| Lecithin | 3.329 | 15 |
| Hydrogenated cottonseed oil | 7.724 | 15 |
| Partially hydrogenated cottonseed oil | 3.196 | 15 |
| BHT | 0.053 | 15 |

The total feed rate is 11.36 kg/hr (25 lb/hr). The temperature is controlled so that the mixture is at from 115°C. to 125°C.

While the examples have been given for relatively small scale operations, the process is readily scaled up. When using twin screw extruders, scale up is accomplished by using a larger barrel diameter, such as 15.24 cm (6 inches), and a longer length, but maintaining the same L/D ratio. For an L/D of 45, a 6 inch barrel would be 6.86 m (22.5 feet) in length. If larger machines generate more heat than can easily be removed, the rpm of the extruder may need to be reduced, or cooled shafts and mixing elements could be used. Also, by putting in some of the resin at the first feed zone, the heat generated during mixing should be reduced.

When conducting the experiment relating to Example 1, the polyisobutylene was originally added at the second feed inlet. This was possible during startup, but when the blend of fats and polyvinyl acetate were also added, the fats melted and lubricated the screws so that they no longer drew in the polyisobutylene. This is why the polyisobutylene is introduced at the first feed zone in Example 1.

In Examples 1 and 2, since the butyl rubber was ground before it was used, a portion of the filler and the ground butyl rubber were premixed (at a ratio of filler to butyl rubber of 1:3) to help keep the ground butyl rubber in a form that allowed it to be fed into the extruder as a powder blend. This filler was included in the overall ratios cited in the examples.

It should be appreciated that the methods of the present invention are capable of being incorporated in the form of a variety of embodiments, only a few of which have been illustrated and described above. The invention may be embodied in other forms without departing from its spirit or essential characteristics. However, the described embodiments are to be considered in all respects only as illustrative and not restrictive, and the scope of the invention is, therefore, indicated by the appended claims.

## Claims

1. A single continuous process for producing a complete chewing gum base comprising the steps of:
a) continuously adding first gum base ingredients comprising at least some elastomer, filler, and elastomer solvent into a continuous mixer;
b) subjecting the elastomer, filler and elastomer solvent to sufficient highly dispersive mixing within the continuous mixer to produce a substantially smooth and lump-free mixture;
c) adding second gum base ingredients comprising at least one or more fats or oils;
d) subjecting the first and second gum base ingredients to sufficient highly distributive mixing within the continuous mixer to produce a substantially homogenous mixture; and
e) continuously discharging the resulting chewing gum base from the continuous mixer while steps a), b), c) and d) are in progress.

2. A process as claimed in claim 1 in which only elastomer, filler and elastomer solvent are subjected to highly dispersive mixing.

3. A process as claimed in claim 1 in which step c) is performed after step b).

4. A process as claimed in claim 1 in which step d) is performed after step b).

5. A process as claimed in any one of claims 1 to 4 wherein the highly distributive mixing is accomplished by a plurality of toothed elements counter-rotating with respect to adjacent toothed elements.

6. A process as claimed in any one of claims 1 to 5 wherein gum base ingredients are added to the mixer at at least two spatially separated points and the highly distributive mixing step is carried out in the mixer after said points.

7. A process as claimed in any one of claims 1 to 6 wherein the adding and mixing steps are controlled to operate at a steady state.

8. A process as claimed in any one of claims 1 to 7 wherein fats and oils are plasticizers.

9. A process as claimed in claim 8 where no oils or fats are subjected to highly dispersive mixing in step b).

10. A process as claimed in any one of claims 1 to 9 wherein the process is carried out in a counter-rotating, intermeshing twin screw extruder.

11. A process as claimed in any one of claims 1 to 10 wherein at least elastomer and filler are supplied to the extruder at a first feed inlet location and oils and fats are added at additional feed inlet locations downstream of the first inlet location and the highly distributive mixing occurs downstream of the last of the downstream feed inlet locations.

12. A process as claimed in any one of claims 1 to 11 wherein the continuous mixer has a length to diameter ratio of up to 58:1.

13. A process as claimed in any one of claims 1 to 12 wherein relatively high viscosity ingredients are added to the mixer via one or more feed inlets located at an upstream location on the mixer.

14. A process as claimed in any one of claims 1 to 13 wherein intermediate viscosity ingredients are added to the mixer via one or more feed inlets located at an intermediate location on the mixer.

15. A process as claimed in any one of claims 1 to 14 wherein low viscosity ingredients are added to the mixer via one or more feed inlets located at a down stream location on the mixer.

16. A process as claimed in any one of claims 1 to 15 wherein the low and medium viscosity ingredients are added in liquid state.

17. A process as claimed in any one of claims 1 to 16 wherein volatile components of the gum base mixture are continuously removed during the extrusion process.

## Patentansprüche

1. Kontinuierliches Einzelverfahren zum Herstellen einer vollständigen Kaugummibase, das die folgenden Schritte umfasst:
a) kontinuierliches Zuführen erster Gummibasenbestandteile, die wenigstens eine gewisse Menge Elastomer, Füllmittel und Elastomer-Lösungsmittel umfassen, in einen kontinuierlich arbeitenden Mischer;
b) Ausführen ausreichenden, stark dispergierenden Mischens des Elastomers, des Füllmittels und des Elastomer-Lösungsmittels in dem kontinuierlich arbeitenden Mischer, um ein im Wesentlichen glattes und klumpenfreies Gemisch herzustellen;
c) Hinzufügen zweiter Gummibasenbestandteile, die wenigstens ein oder mehrere Fette oder Öle umfassen;
d) Ausführen ausreichenden, stark verteilenden Mischens der ersten und der zweiten Gummibasenbestandteile in dem kontinuierlich arbeitenden Mischer, um ein im Wesentlichen homogenes Gemisch herzustellen; und
e) kontinuierliches Ablassen der entstehenden Kaugummibase aus dem kontinuierlich arbeitenden Mischer, während die Schritte a), b), c) und d) ablaufen.

2. Verfahren nach Anspruch 1, wobei nur Elastomer, Füllmittel und Elastomer-Lösungsmittel stark dispergierendem Mischen unterzogen werden.

3. Verfahren nach Anspruch 1, wobei Schritt c) nach Schritt b) ausgeführt wird.

4. Verfahren nach Anspruch 1, wobei Schritt d) nach Schritt b) ausgeführt wird.

5. Verfahren nach einem der Ansprüche 1 bis 4, wobei das stark verteilende Mischen durch eine Vielzahl von mit Zähnen versehenen Elementen erreicht wird, die sich gegenläufig zu angrenzenden, mit Zähnen versehenen Elementen drehen.

6. Verfahren nach einem der Ansprüche 1 bis 5, wobei Gummibasenbestandteile dem Mischer an wenigstens zwei räumlich voneinander getrennten Punkten zugeführt werden und der Schritt des stark verteilenden Mischens in dem Mischer hinter den Punkten ausgeführt wird.

7. Verfahren nach einem der Ansprüche 1 bis 6, wobei die Schritte des Zuführens und des Mischens so gesteuert werden, dass in einem stabilen Zustand gearbeitet wird.

8. Verfahren nach einem der Ansprüche 1 bis 7, wobei Fette und Öle Plastifikatoren sind.

9. Verfahren nach Anspruch 8, wobei in Schritt b) keine Öle oder Fette stark dispergierendem Mischen unterzogen werden.

10. Verfahren nach einem der Ansprüche 1 bis 9, wobei das Verfahren in einem Extruder mit kämmendem Gegendralldoppelschnecken ausgeführt wird.

11. Verfahren nach einem der Ansprüche 1 bis 10, wobei wenigstens Elastomer und Füllmittel dem Extruder an einer ersten Beschickungseinlassposition zugeleitet werden und Öle und Fette an zusätzlichen Beschickungseinlasspositionen stromab von der ersten Beschickungsposition zugeführt werden und das stark verteilende Mischen stromab von der letzten der stromab liegenden Beschickungseinlasspositionen ausgeführt wird.

12. Verfahren nach einem der Ansprüche 1 bis 11, wobei der kontinuierlich arbeitende Mischer ein Verhältnis von Länge zu Durchmesser von bis zu 58 : 1 hat.

13. Verfahren nach einem der Ansprüche 1 bis 12, wobei Bestandteile mit relativ hoher Viskosität dem Mischer über einen oder mehrere Beschickungseinlasse zugeführt werden, die sich an einer stromauf liegenden Position an dem Mischer befinden.

14. Verfahren nach einem der Ansprüche 1 bis 13, wobei Bestandteile mit mittlerer Viskosität dem Mischer über einen oder mehrere Beschickungseinlasse zugeführt werden, die sich an einer mittleren Position an dem Mischer befinden.

15. Verfahren nach einem der Ansprüche 1 bis 14, wobei Bestandteile mit niedriger Viskosität dem Mischer über einen oder mehrere Beschickungseinlasse zugeführt werden, die sich an einer stromab liegenden Position an dem Mischer befinden.

16. Verfahren nach einem der Ansprüche 1 bis 15, wobei die Komponenten mit niedriger und mittlerer Viskosität in flüssigem Zustand zugeführt werden.

17. Verfahren nach einem der Ansprüche 1 bis 16, wobei flüchtige Komponenten der Gummibasenmischung während des Extrusionsverfahrens kontinuierlich entfernt werden.

## Revendications

1. Procédé unique de production en continu d'une base complète de gomme à mâcher, comprenant les étapes consistant à :
a) ajouter en continu des premiers ingrédients d'une base de gomme, comprenant au moins de l'élastomère, une charge et un solvant pour l'élastomère, dans un malaxeur à régime continu ;
b) soumettre l'élastomère, la charge et le solvant pour élastomère à un mélange assez fortement dispersif dans le malaxeur à régime continu pour produire un mélange sensiblement lisse et exempt de grumeaux ;
c) ajouter des seconds ingrédients d'une base de gomme, comprenant au moins une ou plusieurs graisses ou huiles ;
d) soumettre les premiers et seconds ingrédients de la base de gomme à un mélange assez fortement distributif dans le malaxeur à régime continu pour produire un mélange sensiblement homogène ; et
e) soutirer la base résultante de gomme à mâcher en continu à partir du malaxeur à régime continu pendant le déroulement des étapes a), b), c) et d).

2. Procédé selon la revendication 1, dans lequel seulement l'élastomère, une charge et un solvant pour élastomère sont soumis à un mélange fortement dispersif.

3. Procédé selon la revendication 1, dans lequel on effectue l'étape c) après l'étape b).

4. Procédé selon la revendication 1, dans lequel on effectue l'étape d) après l'étape b).

5. Procédé selon l'une quelconque des revendications 1 à 4, dans lequel on effectue le mélange fortement distributif au moyen d'une pluralité d'éléments dentés contrarotatifs par rapport à des éléments dentés contigus.

6. Procédé selon l'une quelconque des revendications 1 à 5, dans lequel les ingrédients de la base de gomme sont ajoutés dans le malaxeur en au moins deux points séparés spatialement, et l'étape de mélange fortement distributif est effectuée dans le malaxeur en aval desdits points.

7. Procédé selon l'une quelconque des revendications 1 à 6, dans lequel on maîtrise les étapes d'addition et de mélange de façon à ce qu'elles soient effectuées en régime permanent.

8. Procédé selon l'une quelconque des revendications 1 à 7, dans lequel les graisses et les huiles sont des plastifiants.

9. Procédé selon la revendication 8, dans lequel les huiles ou les graisses ne pas sont soumises à un mélange fortement dispersif dans l'étape b).

10. Procédé selon l'une quelconque des revendications 1 à 9, qui est mis en oeuvre dans une extrudeuse à deux vis engrenantes contrarotatives.

11. Procédé selon l'une quelconque des revendications 1 à 10, dans lequel au moins l'élastomère et une charge sont amenés dans l'extrudeuse en un premier point d'admission, et des huiles et des graisses sont ajoutées en des points d'admission supplémentaires situés en aval du premier point d'admission, et le mélange fortement distributif apparaît en aval du dernier des points d'admission.

12. Procédé selon l'une quelconque des revendications 1 à 11, dans lequel le malaxeur à régime continu a un rapport de la longueur au diamètre allant jusqu'à 58:1.

13. Procédé selon l'une quelconque des revendications 1 à 12, dans lequel les ingrédients ayant une viscosité relativement élevée sont ajoutés dans le malaxeur par un ou plusieurs orifices d'admission disposés à un endroit en amont dans le malaxeur.

14. Procédé selon l'une quelconque des revendications 1 à 13, dans lequel les ingrédients ayant une viscosité intermédiaire sont ajoutés dans le malaxeur par un ou plusieurs orifices d'admission situés à un endroit intermédiaire dans le malaxeur.

15. Procédé selon l'une quelconque des revendications 1 à 14, dans lequel les ingrédients ayant une faible viscosité sont ajoutés dans le malaxeur par un ou plusieurs orifices d'admission disposés à un endroit situé en aval dans le malaxeur.

16. Procédé selon l'une quelconque des revendications 1 à 15, dans lequel les ingrédients de faible viscosité et les ingrédients de viscosité moyenne sont ajoutés à l'état liquide.

17. Procédé selon l'une quelconque des revendications 1 à 16, dans lequel des composants volatils du mélange de base de gomme sont éliminés en continu pendant le procédé d'extrusion.
